# EUROPÄISCHE PATENTANMELDUNG

(11) **EP 2 108 849 A1**
(43) Veröffentlichungstag der Anmeldung: **14.10.2009**
(21) Anmeldenummer: 08154344.9
(22) Anmeldetag: 10.04.2008
(51) Int. Cl.: F16B 7/02, F16B 7/18

(54) **Verbindungselement**

(71) Anmelder: Horst Witte Gerätebau Barskamp KG, 21354 Bleckede (DE)
(72) Erfinder: Witte, Horst, 21369 Nahrendorf (DE)
(74) Vertreter: Raffay & Fleck

(57) **Zusammenfassung**

Offenbart wird ein Verbindungselement (1) zum lösbaren Verbinden von mindestens zwei Elementen (E), die jeweils mindestens eine T-Nut (T) aufweisen, mit wenigstens zwei Spannstücken (2,3) und mindestens einem Klemmstück (4), sowie mindestens einem Spannmittel (11), wobei die Spannstücke (2,3) und Klemmstücke (4) Gleitflächen (5) beziehungsweise Spannflächen (6) aufweisen, die gegenüber der Längsachse des Spannmittels (11) um einen Winkel von 0° und 90°, insbesondere um 45°, gekippt sind, und wobei mindestens zwei der Spannstücke (2,3) oder Klemmstücke (4) jeweils in einem Querschnitt senkrecht zur Längsachse der Spannmittel (11) ein T-förmiges Profil aufweisen, wobei zumindest zwei der Spannstücke (2,3) oder Klemmstücke (4) zueinander senkrecht stehende Querschnitte mit T-förmigem Profil aufweisen.

Durch ein solches Verbindungselement (1) wird es möglich, Elemente (E) mit T-Nuten (T) flexibel, stabil und einfach zu verbinden. Gegenüber dem Stand der Technik sind die erfindungsgemäßen Verbindungselemente (1) auch dann einsetzbar, wenn die T-Nuten (T) nicht von oben zugänglich sind.

## Beschreibung

Die Erfindung betrifft ein Verbindungselement zum lösbaren Verbinden von mindestens zwei Elementen die jeweils mindestens eine T-Nut aufweisen.

Insbesondere im Vorrichtungsbau, hierbei besonders beim Bau von Aufspannvorrichtungen zum lagegenauen Positionieren und Fixieren von komplex geformten, dreidimensionalen Bauteilen, finden vermehrt Elemente Verwendung, die mit entlang deren Oberflächen geführten T-Nuten ausgestattet sind. Zum Aufbau von zusammengesetzten Strukturen, beispielsweise den oben genannten Aufspannvorrichtungen, müssen diese Elemente miteinander verbunden werden. Hierfür werden heute typischerweise sogenannte Nutensteine eingesetzt, die jedoch ein Einsetzen von oben in die T-Nut voraussetzen und ein in dieser Richtung wirkendes Spannmittel erfordern. Mit anderen Worten ist hier stets für eine Zugänglichkeit der T-Nut beziehungsweise des Spannmittels zum Fixieren des Nutensteins von oben Sorge zu tragen, was die Verbindung hinsichtlich der Flexibilität deutlich beschränkt.

Die Flexibilität wird des Weiteren dadurch weiter eingeschränkt, dass diese Nutensteine ein Verbinden nur in bestimmten Orientierungen erlauben und bei nicht einander überdeckenden T-Nuten zur Verbindung Winkel verwendet werden müssen, die in der Regel durch Verschraubungen mit den Nutensteinen verbunden werden. Bei einer solchen Verbindung sind zum Erreichen einer gewünschten Stabilität der Verbindung verhältnismäßig viele Nutensteine mit den Winkeln zu verschrauben. Dies schränkt nicht nur die Flexibilität ein, sondern ist auch mit einem hohen Verbrauch an Nutensteinen und Arbeit verbunden.

Entsprechend besteht ein Bedarf nach einem Verbindungselement zum lösbaren Verbinden von mindestens zwei Elementen mit darin ausgebildeten T-Nuten, welches flexibel und vielseitig einsetzbar ist und eine sichere und haltbare Verbindung der Elemente miteinander ermöglicht. Ein solches Element wird mit der vorliegenden Erfindung angegeben.

Die vorgenannte Aufgabe wird also gelöst durch ein Verbindungselement mit den Merkmalen des Anspruches 1. Vorteilhafte Weiterbildungen eines solchen Elementes sind in den abhängigen Ansprüchen 2 bis 15 angegeben.

Die grundsätzliche Idee des erfindungsgemäßen Verbindungselementes liegt darin, die Klemmstücke zwischen beziehungsweise an Spannstücken so anzuordnen, dass sie durch ein gegeneinander Verspannen der Spannstücke beziehungsweise von Spannstück und Klemmstück in Längsrichtung des Verbindungselementes auf einander zu bewegt werden, wobei sie mit ihren Klemmflächen und Andruckflächen Kraft auf die jeweilige T-Nut, in welcher sie sitzen, ausüben. Da das Spannmittel, z.B. eine Spannschraube, das Klemmstück beziehungsweise das Spannstück in der Regel in dessen Längsrichtung durchragt, läuft auch dieses damit in Richtung des Längsverlaufs der T-Nut und ist insoweit auch dann von außen zugänglich, wenn der Zugang von oben in die T-Nut verbaut ist. In einem solchen Falle wäre ein Nutenstein von oben her gerade nicht mehr zu erreichen, hier wäre ein Verbinden nicht möglich.

Ein erfindungsgemäßes Verbindungselement zum lösbaren Verbinden von mindestens zwei Elementen, die jeweils mindestens eine T-Nut aufweisen, beinhaltet gemäß Anspruch 1 wenigstens zwei Spannstücke, mindestens ein Klemmstück und mindestens ein Spannmittel. Die Spannstücke weisen Gleitflächen auf, die in einem Winkel von >0° und <90° zur Längsachse eines mit dem jeweiligen Spannstück in Verbindung stehenden Spannmittels orientiert sind. Vorzugsweise beträgt dieser Winkel 45°. Bei diesen Gleitflächen muss es sich nicht zwangsläufig um eine zusammenhängende Fläche handeln, vielmehr kann die Gleitfläche auch durch mehrere Flächenstücke gebildet werden.

Das mindestens eine Klemmstück weist ebenfalls eine Spannfläche auf, die in einem Winkel >0° und <90° zur Längsachse eines mit dem mindestens einen Klemmstück in Verbindung stehenden Spannmittels orientiert ist.

Das mindestens eine Klemmstück wird durch das mindestens eine Spannmittel auf ein beziehungsweise zwischen zwei Spannstück(en) ein- beziehungsweise aufgespannt. Dabei sind die paarweise aneinander angrenzenden Spann- und Gleitflächen jeweils parallel orientiert. Durch Betätigen des jeweiligen Spannmittels werden Spannstück und Klemmstück aufeinander zu bewegt. Durch die zu dieser Bewegung schrägen Spann- und Gleitflächen bewegen sich Spannstück und Klemmstück in einer Richtung senkrecht zur Längsachse des Spannmittels relativ zueinander.

Erfindungsgemäß weisen mindestens zwei der Spannstücke oder Klemmstücke jeweils in einem Querschnitt senkrecht zur Längsachse eines mit ihnen verbundenen Spannmittels ein T-förmiges Profil auf. Dabei stehen mindestens zwei dieser Querschnitte senkrecht aufeinander und einer dieser Querschnitte auch senkrecht auf der Längsachse eines Spannmittels.

Die Spannstücke weisen Andruckflächen und die Klemmstücke Klemmflächen auf. Durch die beschriebene Relativbewegung von Spannstück und Klemmstück ist es möglich, Spannstück und Klemmstück über ihre Andruckflächen beziehungsweise Klemmflächen in den T-Nuten der Elemente zu befestigen.

Dies geschieht auf unterschiedliche Weise: Zum einen ist es möglich, dass die Klemmflächen und Andruckflächen beim Spannen des Spannmittels von einander weg bewegt werden. In einer solchen Anordnung können beispielsweise die Andruckflächen in die Hinterschneidungen der T-Nut greifen und die Klemmflächen gegen den Boden der T-Nut drücken.

Zum anderen können die Andruckflächen in die Hinterschneidungen einer T-Nut eines Elementes greifen und die Klemmflächen in die Hinterschneidungen einer T-Nut eines zweiten Elementes greifen. Werden dann die Andruck- und Klemmflächen durch Betätigung der Spannvorrichtung aufeinander zu bewegt, werden die beiden Elemente aufeinander gepresst und dadurch fixiert.

Insbesondere für den ersten Fall, in dem die Andruck- und Klemmflächen von einander weg gespannt werden, ist es somit nicht erforderlich, dass alle Klemmstücke und Spannstücke T-förmige Profile aufweisen. Vielmehr reicht es aus, wenn pro Element ein Klemmstück oder Spannstück mit einem T-förmigen Profil ausgestattet ist, so dass es in die Hinterschneidungen der T-Nut passen kann. Die weiteren Klemm- oder Spannstücke, die in dieses Element greifen, brauchen lediglich eine Andruck- oder Klemmfläche aufzuweisen. Gerade bei abgerundeten beziehungsweise pilzförmigen Nuten kann es jedoch vorteilhaft sein, auch die nicht in die Hinterschneidungen greifenden Klemm- oder Spannstücke mit an die Form der T-Nut angepassten, also beispielsweise T-förmigen oder pilzförmigen Profilen zu wählen.

In der Regel wird es aber vorteilhaft sein, gemäß Anspruch 2 jedes Klemmstück jeweils mit mindestens einer zu mindestens einer Andruckfläche des mindestens einen benachbarten Spannstücks parallele Klemmfläche auszustatten.

Insbesondere in der Ausführung, in der die Klemm- und Andruckflächen aufeinander zu bewegt werden, wird dadurch ein sicheres Verspannen der Elemente ermöglicht. Gemäß Anspruch 3 ist es besonders vorteilhaft, wenn die Spannelemente und/oder Klemmelemente jeweils mindestens zwei Andruckflächen, insbesondere jeweils zwei fluchtende Andruckflächen, aufweisen. Bei der Verklemmung in den Hinterschneidungen der T-Nuten, kann so ein sicherer Halt gewährleistet werden.

Sind gemäß Anspruch 2 benachbarte, parallele Klemm- und Andruckflächen vorhanden, ist es besonders vorteilhaft, wenn gemäß Anspruch 4 die durch das Spannen hervorgerufene Relativbewegung der Andruck- und Klemmflächen senkrecht zu diesen Flächen erfolgt.

Dadurch ist es möglich, die aufgebrachte Spannkraft besonders effektiv zu nutzen.

Wie schon erwähnt, ist es besonders vorteilhaft, gemäß Anspruch 5 die Querstrukturen des T-förmigen Profils der Spannstücke und/oder Klemmstücke abgeschrägt beziehungsweise abgerundetet, insbesondere an die Form der T-Nuten angepasst, auszubilden.

Dadurch kann die Anliegefläche der Spannstücke und/oder Klemmstücke an den T-Nuten maximiert werden. Dieses reduziert die Gefahr eines Verrutschens.

Eine besonders sichere Fixierung kann, insbesondere bei aufeinander zu zu bewegenden Klemm- und Andruckflächen, gemäß Anspruch 6 dadurch erreicht werden, dass jeweils mindestens zwei Andruckflächen jedes Spannstückes oder mindestens zwei Klemmflächen jedes Klemmstückes in Hinterschneidungen der jeweiligen T-Nuten greifen.

Durch eine solche Ausgestaltung wird wiederum die zum Anpressen verwendete Fläche optimiert und die Gefahr eines Verkantens verringert.

Anders als die meisten Nutensteine können die erfindungsgemäßen Verbindungselemente jedenfalls, wenn sie einen vollständigen T-förmigen Querschnitt aufweisen, nicht ohne Weiteres senkrecht von oben in eine T-Nut eingesetzt werden, sondern sind seitlich in diese einzuschieben. Um auch hier eine höhere Flexibilität zu erreichen, insbesondere ein erfindungsgemäßes Verbindungselement auch senkrecht von oben in einer T-Nut einsetzen zu können, kann das erfindungsgemäße Verbindungselement wie in Anspruch 4 angegeben ausgebildet sein. Durch einen einseitig verkürzten Arm, also das Verkürzen eines Teils des Querträgers des T-Profils, kann das erfindungsgemäße Klemmstück beziehungsweise Spannstück zunächst mit dem unverkürzten Arm in die T-Nut eingeschoben und dann mit dem verkürzten Arm durch eine Schwenkbewegung gänzlich in die T-Nut eingebracht werden. Hierbei ist darauf zu achten, dass trotz des verkürzten Armes bei den Klemmstücken beziehungsweise Spannstücken noch ausreichend Klemmfläche beziehungsweise Andruckfläche verbleibt, um die miteinander zu verbindenden Elemente auch im Bereich des verkürzten Armes sicher gegeneinander zu drücken beziehungsweise die Klemmstücke beziehungsweise Spannstücke sicher in der Nut zu verklemmen.

Das Spannmittel kann in einer einfachen Variante eine Spannschraube sein. Diese durchragt z.B. ein Spannstück und trifft im dazugehörigen Klemmstück auf ein entsprechendes Innengewinde. Dabei ist darauf zu achten, dass die Durchführung durch das Spannstück so groß gewählt wird, dass sie die Relativbewegung des Spannstückes gegenüber dem Klemmstück in Richtung senkrecht zur Längsachse der Spannschraube erlaubt. Statt des Innengewindes kann natürlich eine Mutter oder ähnliches vorgesehen werden. Besonders vorteilhaft, platzsparend und optisch ansprechend ist es, für die Schraubenköpfe Senkbohrungen gemäß Anspruch 10 vorzusehen. Dies vermindert auch die Verletzungsgefahr, die ansonsten durch herausstehende Schraubenköpfe gegeben ist.

Wie schon oben angeführt, sind zahlreiche Ausbildungen der Erfindung denkbar, die je nach Anwendungsfall ihre besonderen Vorteile aufweisen. Dementsprechend ist es beispielsweise vorteilhaft, gemäß Anspruch 11 ein Verbindungselement derart auszugestalten, dass es kombinierte Spann-Klemmstücke aufweist. Diese kombinierten Spann-Klemmstücke weisen mindestens ein Spann- und mindestens ein Klemmteil auf. Das bedeutet, dass zur Bildung eines Spann-Klemmstückes ein Spannstück und ein Klemmstück fest miteinander verbunden beziehungsweise direkt als ein Teil gefertigt werden. Ein solches Spann-Klemmstück weist somit je Spann- beziehungsweise Klemmteil mindestens eine Vorrichtung zum Angreifen eines Spannmittels auf. Dabei verlaufen die Längsrichtungen mindestens zweier zugehöriger Spannmittel nicht parallel. Ein solches kombiniertes Spann-Klemmstück ist somit sozusagen ein Winkelstück.

Durch solche kombinierten Klemm-Spannstücke wird es möglich, besonders platzsparend und flexibel Verbindungen zwischen Elementen herzustellen. Besonders vorteilhaft ist der Einsatz solcher Spann-Klemmstücke in einem Verbindungselement gemäß Anspruch 12, das zwei Spannstücke, ein Klemmstück und zwei Spann-Klemmstücke sowie drei Spannmittel beinhaltet. Dabei bilden diese Bauteile je nach Winkligkeit der Spann-Klemmstücke einen Bogen beziehungsweise ein U. Zu diesem Zweck wird durch jeweils ein Spannmittel ein Spannstück mit dem Klemmteil eines Spann-Klemmstücks verbunden. Das Klemmstück wird durch das verbleibende Spannmittel zwischen den Spannteilen des Spann-Klemmstückes angeordnet. Weist das Spann-Klemmstück beispielsweise einen Winkel zwischen den Längsrichtungen der zugehörigen Spannmittel von 90° auf, so ist es durch ein solches Verbindungselement möglich, auf ein Element senkrecht zu der T-Nut zwei weitere Elemente zu montieren.

Je nach Anwendung kann auch ein Verbindungselement gemäß Anspruch 13, das zwei Spannstücke, ein Klemmstück und ein Spannmittel beinhaltet, vorteilhaft sein. Dabei wird das Klemmstück zwischen den Spannstücken angeordnet. Das Klemmstück ist in einem solchen Verbindungselement gemäß Anspruch 13 derart ausgebildet, dass das Klemmstück in einer Ebene, in der auch die Längsrichtung des Spannmittels verläuft, einen T-förmigen Profilanteil aufweist. Die Spannstücke weisen in einer solchen Anordnung in einem Querschnitt senkrecht zur Längsrichtung des Spannmittels ein T-förmiges Profil auf. Das Klemmstück ist dabei derart gebildet, dass es zusammen mit dem Spannmittel und den Spannstücken in der Nut eines ersten Elementes liegt und sein T-förmiger Profilanteil in der Nut eines zweiten Elementes liegt. Beim Spannen werden dann die T-förmigen Profile der Spannstücke auf den T-förmigen Profilanteil des Klemmstücks zu bewegt. Dadurch werden die zwei zu verbindenden Elemente aufeinander gedrückt und verspannt.

Eine Weiterbildung dieses Verbindungselementes gibt Anspruch 14 an. Dabei ist das Klemmstück aus zwei gegeneinander drehbaren und miteinander verbundenen Teilen gebildet. Vorteilhafterweise sind diese Teile nicht nur drehbar, sondern auch lösbar arretierbar und weisen ggf. Einrastungen auf. Das eine der beiden Teile liegt dabei in der T-Nut des einen Elementes und nimmt einen Teil des Spannmittels auf. Das zweite Teil weist dabei den T-förmigen Profilanteil auf und liegt in der T-Nut des zweiten Elementes. So werden die miteinander zu verbindenden Elemente wie schon im Verbindungselement gemäß Anspruch 13 aufeinander gedrückt und verklemmt. Jedoch ist bei einer Ausführung gemäß Anspruch 14 der Winkel zwischen den Elementen frei wählbar.

Besonders vorteilhaft und einfach herzustellen kann je nach Anwendung auch ein Verbindungselement gemäß Anspruch 15 sein, das zwei Spannstücke, ein Klemmstück und zwei Spannmittel beinhaltet. Das Klemmstück ist dabei im Wesentlichen aus einer dreieckigen Platte gebildet. An zwei Ecken dieser Platte werden über Spannmittel die Spannstücke angebracht. Die Spannstücke weisen jeweils ein T-förmiges Profil auf. Mit diesem Profil greifen sie in die Hinterschneidungen der T-Nuten. Die Platte drückt beim Verspannen gegen die Spannstücke mit zwei ihrer Stirnflächen gegen die Böden der T-Nuten. Somit ist es durch ein solches Verbindungselement möglich, zwei Elemente mit T-Nuten winklig zueinander zu fixieren.

Weitere Ausbildungen eines erfindungsgemäßen Verbindungselementes sind durch den Fachmann leicht auffindbar. Insbesondere können sie auch durch die Kombination der verschiedenen, geschilderten Möglichkeiten erreicht werden.

Im Folgenden sollen anhand von Ausführungsbeispielen weitere Vorteile und Möglichkeiten deutlich gemacht werden. Diese Ausführungsbeispiele stellen jedoch nur mögliche Ausgestaltungen dar und schränken die Erfindung keineswegs ein. Dabei zeigen die Figuren im Einzelnen:
- Fig. 1: ein L-förmiges Verbindungselement;
- Fig. 2: L-förmiges Verbindungselement aus Fig. 1 in zwei Elementen mit T-Nuten;
- Fig. 3: ein U-förmiges Verbindungselement mit kombinierten Spann-Klemmstücken;
- Fig. 4: U-förmiges Verbindungselement mit kombinierten Spann-Klemmstücken aus Fig. 3 in zwei Elementen mit T-Nuten;
- Fig. 5: ein X-förmiges Verbindungselement;
- Fig. 6: ein Verbindungselement für zwei Elemente mit frei wählbarem Winkel;
- Fig. 7: Verbindungselement mit frei wählbarem Winkel aus Fig. 6 in zwei Elementen mit T-Nuten und
- Fig. 8: ein winkeliges Verbindungselement mit einem Knotenblech und
- Fig. 9: winkeliges Verbindungselement mit einem Knotenblech aus Fig. 8 in zwei Elementen mit T-Nuten.

Die Figuren sind dabei rein schematisch und dienen lediglich der Erläuterung verschiedener, möglicher Ausführungsformen.

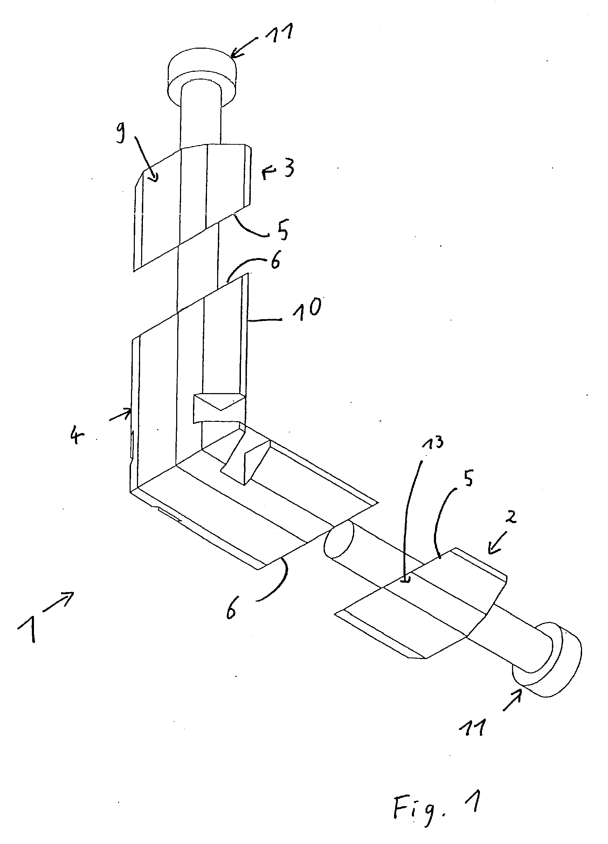

Fig. 1 zeigt ein L-förmiges Verbindungselement 1 zum Verbinden von zwei Elementen E mit T-Nuten T. Es beinhaltet ein Klemmstück 4, zwei Spannstücke 2,3 und zwei Spannmittel 11. Dabei weist das Klemmstück 4, das rechtwinklig ausgeführt ist, zwei Innengewinde 8 zur Aufnahme von zwei Spannmitteln 11 auf. Über die zwei Spannmittel 11 werden zwei Spannstücke 2,3 mit dem Klemmstück 4 verbunden. Die Spannstücke 2,3 weisen dabei zur Aufnahme der Spannmittel 11 jeweils eine Durchgangsöffnung 7 auf, die so bemessen ist, dass sie eine Relativbewegung des Spannstücks 2, 3 gegenüber dem Klemmstück 4 senkrecht zu den Andruckflächen 9 und Klemmflächen 10 ermöglichen. Beim Spannen der Spannmittel 11 gleiten die Spannstücke 2,3 aufgrund der schrägen Gleitflächen 5 und Spannflächen 6 ab. Dadurch werden die Andruckflächen 9 von den Klemmflächen 10 wegbewegt.

Ist das Verbindungselement 1 in zwei T-Nuten T zweier Elemente E eingelegt, greifen die Klemmflächen 10 in die Hinterschneidungen H der T-Nuten T und drücken die Andruckflächen 9 beim Spannen der Spannmittel 11 gegen die Böden der T-Nuten T. Dadurch wird das Verbindungselement 1 in den T-Nuten T der Elemente E verklemmt. Dies führt zu einer rechtwinkligen, lösbaren Verbindung der beiden Elemente E.

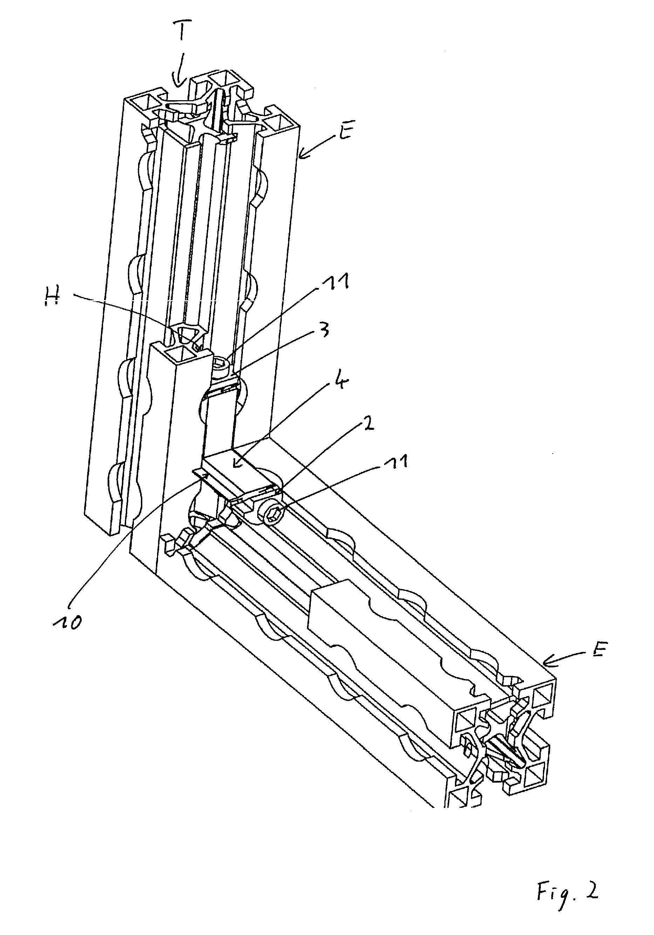

Fig. 2 zeigt das L-förmiges Verbindungselement 1 aus Fig. 1, eingelegt in zwei Elemente E mit T-Nuten T. Dabei sind die Elemente E teilweise ausgeblendet, um eine bessere Darstellung des Verbindungselements 1 zu ermöglichen.

Zu erkennen ist, dass die Klemmflächen 10 des Klemmstücks 4 in Hinterschneidungen H der T-Nuten T der Elemente E greifen.

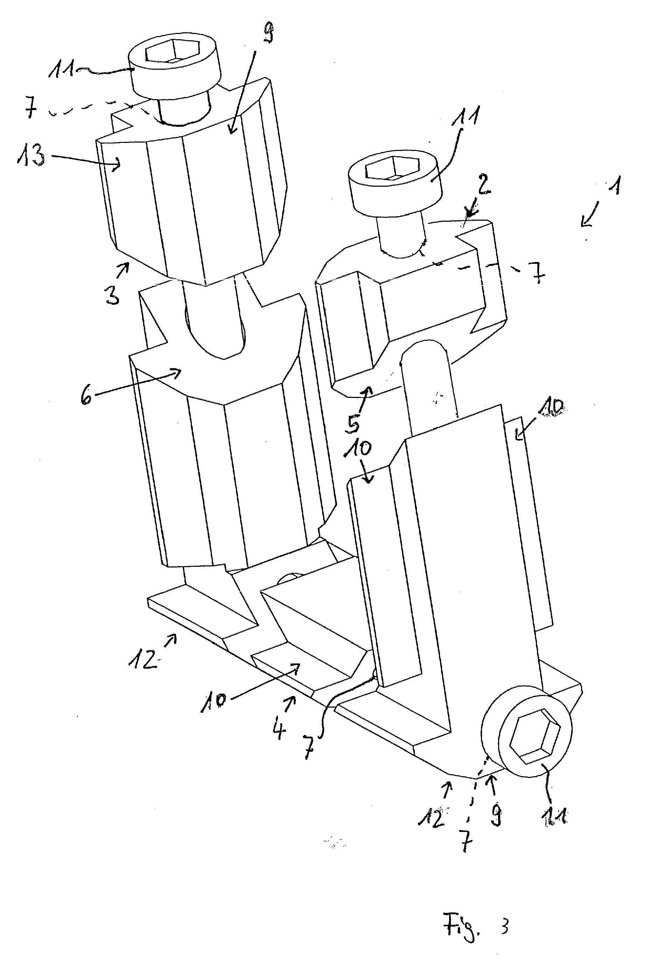

Fig. 3 zeigt einen U-förmigen Verbinder 1 zum Verbinden von zwei Elementen E. Zum Verbinden der Elemente E werden zwei in der Figur nach oben stehende Schenkel mit ihren freien Enden in T-Nuten T auf zwei parallelen Seiten eines Elementes E eingeführt. Der hier gezeigte Verbinder 1 besteht aus zwei Spann-Klemmstücken 12, einem Klemmstück 4, zwei Spannstücken 2,3 und drei Spannmitteln 11. Die Spann-Klemmstücke 12 sind jeweils mit ihrem Klemmstückteil über ein Spannmittel 11 mit den Spannstücken 2,3 verbunden. Die Klemmstückteile der Spann-Klemmstücke 12 und die Spannstücke 2 beziehungsweise 3 bilden die oben erwähnten Schenkel.

Das Klemmstück 4 ist über ein Spannmittel 11 mit den beiden Spannteilen der Spann-Klemmstücke 12 verbunden. Dabei weisen beide Spann-Klemmstücke 12 in ihren Klemmstückteilen Innengewinde 8 auf, in die die Spannschrauben 11 greifen. Die Spannstücke 2,3 weisen Durchgangsöffnungen 7 auf, durch die die Spannschrauben 11 geführt sind. Die Durchgangsöffnungen 7 sind so groß gewählt, dass sie eine Relativbewegung der Spannstücke 2,3 gegenüber den Spannschrauben 11 senkrecht zur Längserstreckung der Spannschraube 11 und senkrecht zu den Andruckflächen 9 und Klemmflächen 10 erlauben.

Das in der Figur rechte Spann-Klemmstück 12 weist in seinem Spannteil eine Durchgangsöffnung 7 auf, durch die die Spannschraube 11 mit nur sehr wenig Spiel geführt ist. Das in der Figur links dargestellte Spann-Klemmstück 12 weist ein hier nicht bezeichnetes Innengewinde auf, das die Spannschraube 11 aufnimmt. Das Klemmstück 4 weist eine Durchgangsöffnung 7 auf, die wie die Durchgangsöffnung 7 der Spannstücke 2,3 eine Relativbewegung des Klemmstücks 4 gegenüber den Spann-Klemmstücken 12 in Richtung senkrecht zu den Andruckflächen 9 beziehungsweise Klemmenflächen 10 erlaubt.

Werden die Spannschrauben 11 angezogen, drücken sie die Spannstücke 2,3 auf die Klemmteile der Spann-Klemmstücke 12 beziehungsweise die Spannteile der Spann-Klemmstücke 12 auf das Klemmstück 4. Die dabei aufeinander abrutschenden Gleitflächen 5 und Spannflächen 6 bewirken eine Verschiebung der Andruckflächen 9 gegenüber den Klemmflächen 10.

Ist das Verbindungselement 1 in drei T-Nuten eingelegt, greifen die Klemmflächen 10 in die Hinterschneidungen der T-Nuten und drücken die Andruckflächen 9 gegen den Boden der T-Nuten. Dadurch werden jeweils das Spannstück 2,3 mit dem Klemmteil des Spann-Klemmstücks 12 beziehungsweise das Klemmstück 4 mit den Spannteilen der Spann-Klemmstücke 12 in den T-Nuten T verklemmt. Somit sind die T-Nuten T aufweisenden Elemente E nach dem Verspannen miteinander lösbar verbunden.

In dem gezeigten Ausführungsbeispiel sind die Profile der Spannstücke 2,3, der Spann-Klemmstücke 12 und des Klemmstücks 4 mit Abschrägungen 13 versehen, die auf die Form der T-Nuten T abgestimmt sein kann.

Auch ist es möglich, nicht nur die hier gezeigte Andruckfläche 9 zum Verklemmen zu verwenden. Vielmehr kann bei entsprechender Abstimmung der Profile der Spannstücke 2,3, Spann-Klemmstücke 12 beziehungsweise des Klemmstücks 4 auch die Abschrägungen 13 als Andruckflächen 9 verwendet werden.

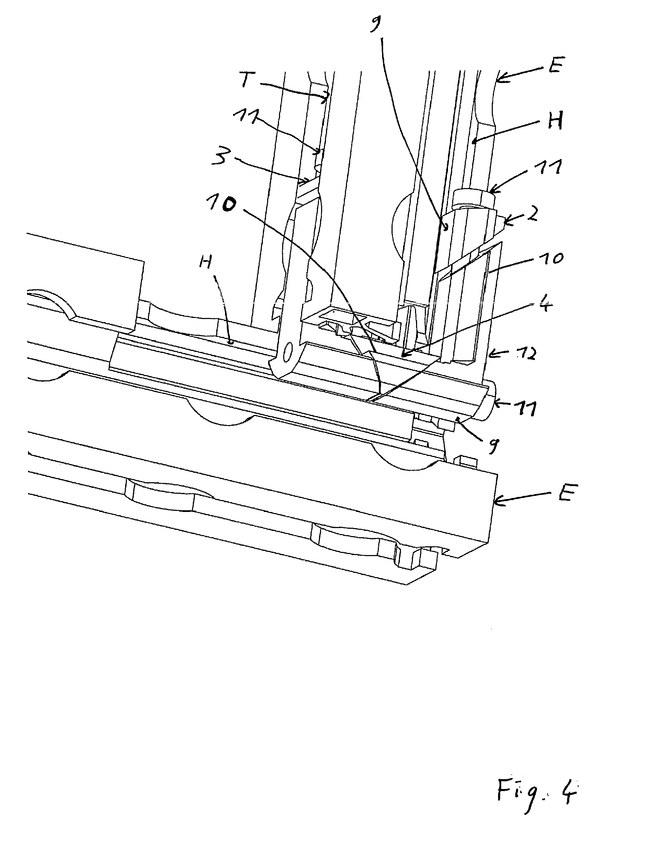

Fig. 4 zeigt den U-förmigen Verbinder 1 aus Fig. 3, eingelegt in zwei Elemente E mit T-Nuten T. Dabei sind die Elemente E teilweise ausgeblendet, um eine bessere Darstellung des Verbindungselements 1 zu ermöglichen.

Zu erkennen ist, dass die Klemmflächen 10 in Hinterschneidungen H der T-Nuten T der Elemente E greifen.

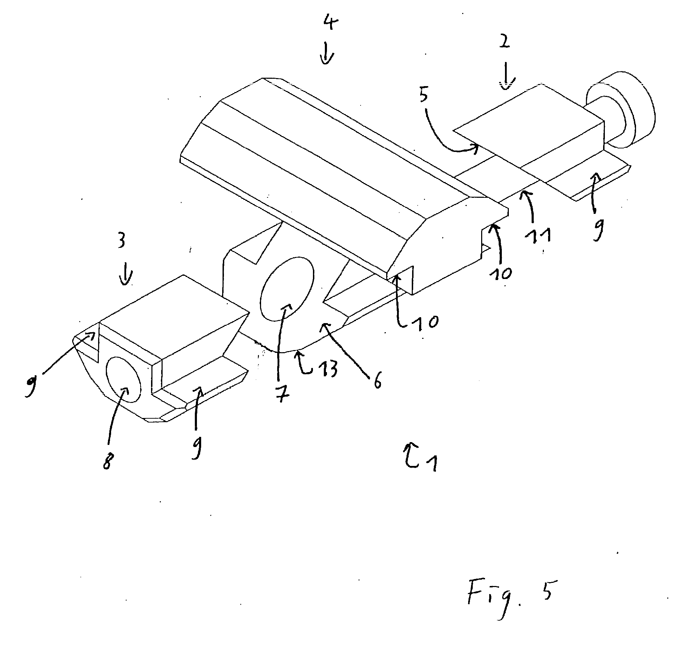

Fig. 5 zeigt ein Verbindungselement 1 beinhaltend zwei Spannstücke 2,3 und ein Klemmstück 4 sowie ein Spannmittel 11. Dabei wird das Klemmstück 4 durch das Spannmittel 11 zwischen den Spannstücken 2,3 eingespannt. Zu diesem Zweck weist das Spannstück 3 ein Innengewinde 8 auf, in das die Spannschraube 11 eingreifen kann. Das Spannstück 2 ist mit einer Durchgangsöffnung 7 ausgestattet, die die Spannschraube 11 mit nur wenig Spiel aufnimmt. Die Durchgangsöffnung 7 des Klemmstücks 4 hingegen ist so groß gewählt, dass sie eine relative Verschiebung des Klemmstücks 4 gegenüber den Spannstücken 2,3 senkrecht zu den Andruckflächen 9 und den Klemmflächen 10 erlaubt.

Werden die Spannstücke 2,3 durch Spannen der Spannschraube 11 auf das Klemmstück 4 aufgedrückt, gleitet das Klemmstück 4 aufgrund der schrägen Gleitflächen 5 und Spannflächen 6 senkrecht zu den Andruckflächen 9 und Klemmflächen 10 ab. Dadurch werden die Andruckflächen 9 auf die Klemmflächen 10 zu bewegt. Ist das Verbindungselement 1 in zwei T-Nuten T zweier Elemente E eingelegt, greifen die Andruckflächen 9 und Klemmflächen 10 in die Hinterschneidungen H der T-Nuten T und drücken beim Spannen die Elemente E rechwinklig zueinander aufeinander. Dadurch werden diese rechtwinklig fixiert. Auch in diesem Ausführungsbeispiel sind die Profile der Spannstücke 2,3 und des Klemmstückes 4 mit Abschrägungen 13 versehen. Bei diesem Ausführungsbeispiel werden die Abschrägungen 13 nicht als Andruckflächen 9 Verwendung finden können. Die Anpassung der Profile an die Profile der T-Nuten T bewirkt jedoch den Vorteil, dass diese in den T-Nuten T nicht verkanten können.

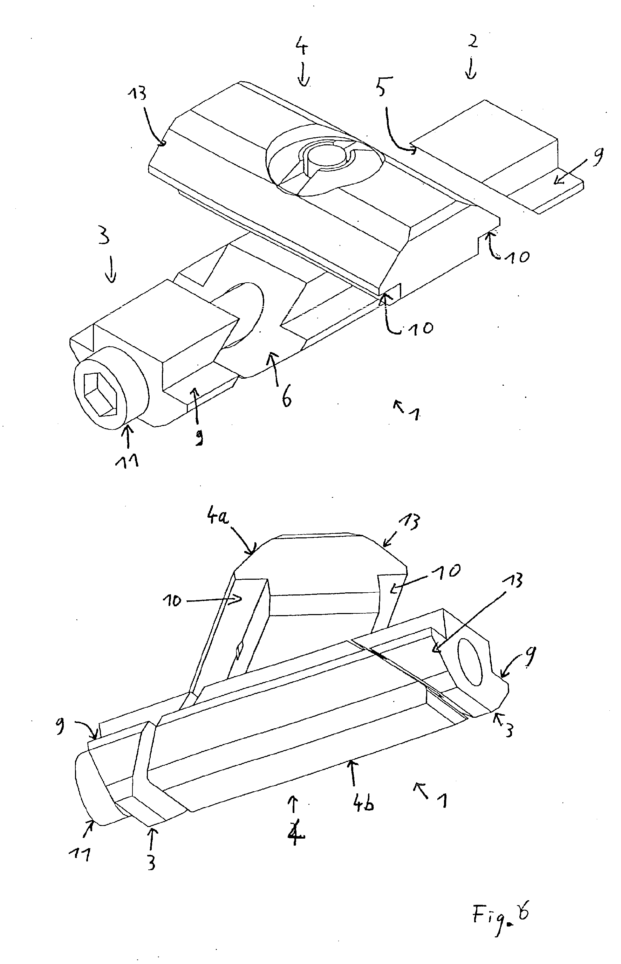

Fig. 6 zeigt ein dem Verbindungselement 1 aus Fig. 5 sehr ähnliches Verbindungselement 1. Im Unterschied zum Verbindungselement aus Fig. 2 ist hier das Klemmstück 4 jedoch so ausgeführt, dass es 2 gegeneinander verdrehbare Klemmstückteile 4a, 4b aufweist. Dies ermöglicht es, den Winkel zwischen den durch das Verbindungselement 1 verbundenen Elementen frei zu wählen. Dabei kann das Klemmstück 4 so ausgeführt sein, dass die Verdrehung der zwei Klemmstückteile 4a, 4bdes Klemmstückes 4 frei möglich ist, festsetzbar ist oder Einrastungen aufweist. Zwar ist der Winkel spätestens nach Verklemmen des Verbindungselementes 1 durch die Klemmkraft zwischen den zwei Elementen E fixiert, doch kann es vorteilhaft sein, den Winkel schon vor dem Verklemmen zu fixieren, um die Montage zu erleichtern.

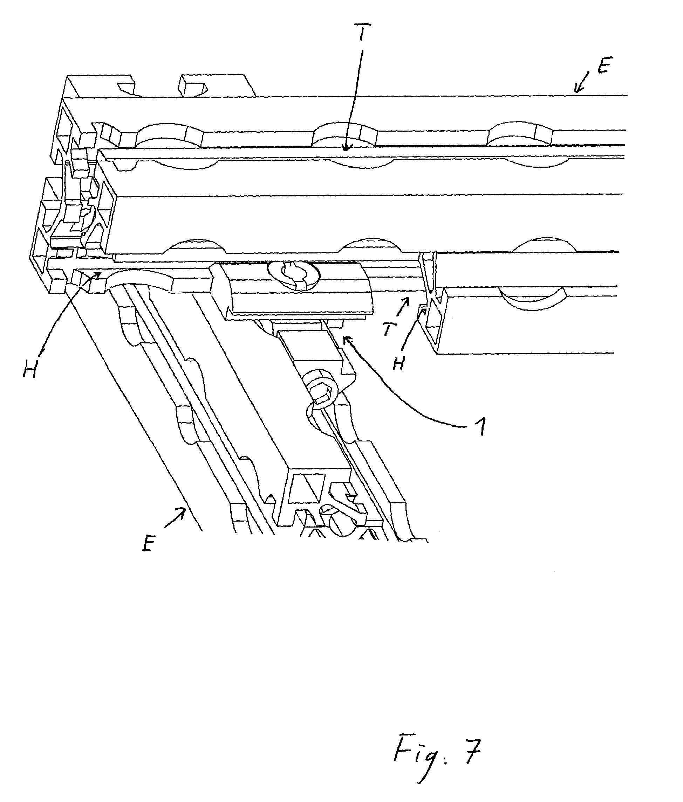

Fig. 7 zeigt das Verbindungselement 1 aus Fig. 6, eingelegt in zwei Elemente E mit T-Nuten T. Dabei sind die Elemente E teilweise ausgeblendet, um eine bessere Darstellung des Verbindungselements 1 zu ermöglichen.

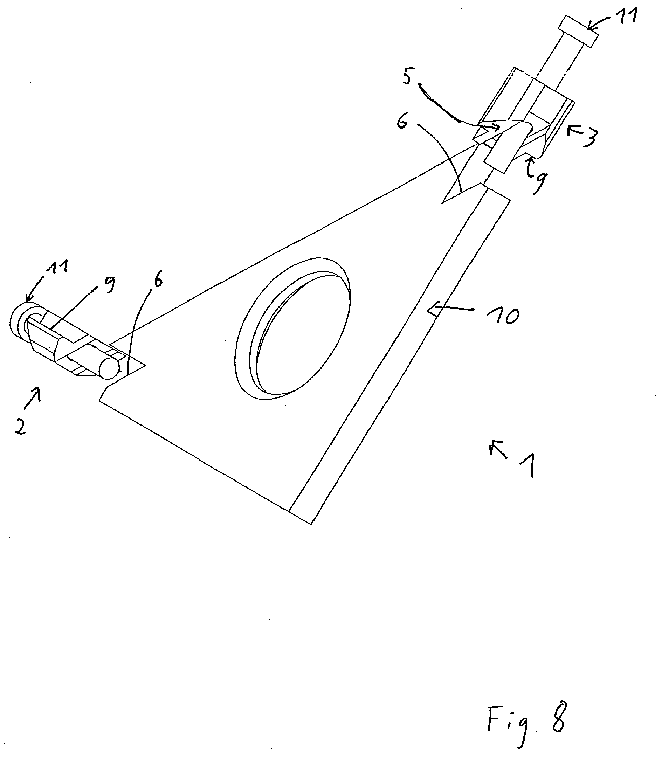

Fig. 8 zeigt ebenfalls ein winkeliges Verbindungselement 1 zum Verbinden von 2 Elementen E mit zwei T-Nuten T. Das hier gezeigte Verbindungselement 1 beinhaltet jedoch ein Knotenblech als Klemmstück 4, sowie zwei Spannstücke 2,3 und zwei Spannmittel 11. Beim Verspannen des Verbindungselementes 1 über die Spannmittel 11 werden aufgrund der schrägen Gleitflächen 5 und Spannflächen 6 die Andruckflächen 9 von den Klemmflächen 10 des Knotenbleches weg bewegt. Ist das Verbindungselement in zwei T-Nuten eingelegt, greifen die Andruckflächen 9 in die Hinterschneidungen der T-Nuten T und drücken die Klemmflächen 10 gegen die Böden der T-Nuten T. Dadurch wird das Verbindungselement 1 in den T-Nuten T befestigt und die Elemente E miteinander verbunden.

Das hier gezeigte Knotenblech ist ein rechtwinkliges. Jedoch sind alle weiteren Winkel denkbar.

Die Verwendung eines Knotenblechs als Klemmstück 4 bringt zahlreiche Vorteile. So wird durch ein Knotenblech bei vergleichsweise geringem Gewicht eine hohe Stabilität erzielt. Auch ist die Herstellung eines solchen Knotenbleches verglichen mit der Herstellung von in Fig. 1 gezeigten Klemmstücken sehr einfach. Des Weiteren kann ein solches Klemmstück 4, das keine T-förmigen Profile aufweist, auch problemlos nachträglich in eine T-Nut T eingesetzt werden.

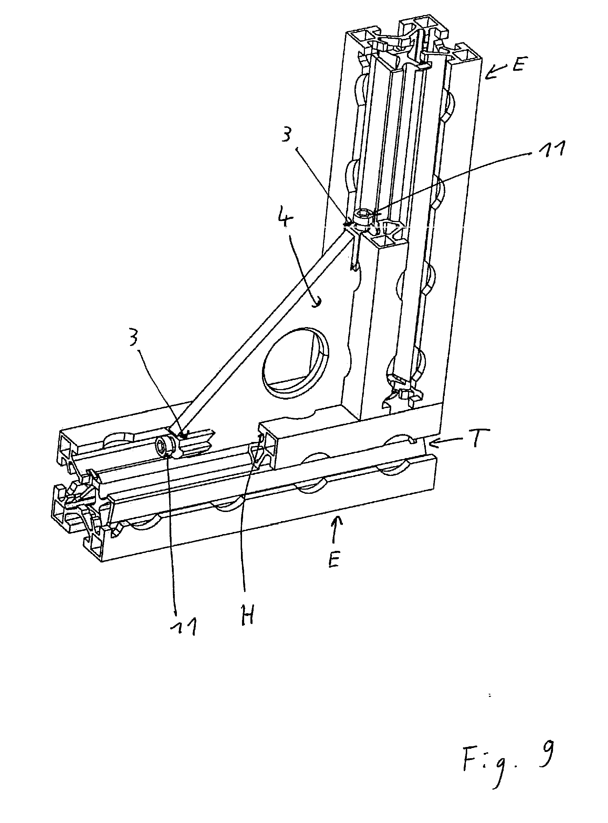

Fig. 9 zeigt das Verbindungselement 1 aus Fig. 8, eingelegt in zwei Elemente E mit T-Nuten T. Dabei sind die Elemente E teilweise ausgeblendet, um eine bessere Darstellung des Verbindungselements 1 zu ermöglichen.

Die zahlreichen Ausführungsbeispiele haben somit deutlich gemacht, dass die Erfindung auf verschiedenste Weisen umgesetzt werden kann und dadurch zahlreiche Vorteile realisierbar sind. Weitere Kombinationen und Abwandlungen sind durch den Fachmann leicht auffindbar.

### Bezugszeichenliste

- 1: Verbindungselement
- 2: Spannstück
- 3: Spannstück
- 4: Klemmstück

- 4a: Klemmstückteil
- 4b: Klemmstückteil

- 5: Gleitfläche
- 6: Spannfläche
- 7: Durchgangsöffnung
- 8: Innengewinde
- 9: Andruckfläche
- 10: Klemmfläche
- 11: Spannschraube
- 12: Spann-Klemmstück
- 13: Abschrägung
- E: Element
- T: T-Nut
- H: Hinterschneidung

## Patentansprüche

1. Verbindungselement (1) zum lösbaren Verbinden von mindestens zwei Elementen (E), die jeweils mindestens eine T-Nut (T) aufweisen, mit:
i. wenigstens zwei Spannstücken (2,3), mit je mindestens einer Andruckfläche (9) und
ii. mindestens einem auf ein oder zwischen zwei Spannstück(en) (2, 3) durch mindestens ein Spannmittel (11) ein- beziehungsweise aufspannbarem, Klemmstück (4) mit mindestens einer zur Längsachse eines Spannmittels (11) in einem Winkel zwischen 0° und 90°, insbesondere in einem Winkel von 45°, verlaufenden Spannfläche (6) und mindestens einer Klemmfläche (10),
wobei die Spannstücke (2, 3) jeweils mindestens eine zur Längsachse eines der Spannmittel (11) in einem Winkel zwischen 0° und 90°, insbesondere in einem Winkel von 45°, verlaufende Gleitfläche (5) aufweisen, wobei mindestens zwei der Spannstücke (2, 3) oder Klemmstücke (4) jeweils in einem Querschnitt senkrecht zur Längsachse eines der Spannmittel (11) ein T-förmiges Profil aufweisen, wobei zumindest zwei der Spannstücke (2, 3) oder Klemmstücke (4) zueinander senkrecht stehende Querschnitte mit T-förmigem Profil aufweisen, wobei mindestens einer dieser Querschnitte auch senkrecht zu der Längsachse eines der Spannmittel (11) steht und wobei sich in Richtung der Längsachse jedes der mindestens einen Spannmittel (11) jeweils zu einander parallele Spannflächen (6) und Gleitflächen (5) abwechseln und wobei bei dem Verspannen der Spannstücke (2, 3) auf das mindestens eine Klemmstück (4) aufgrund des Zusammenwirkens zwischen benachbarten Spannflächen (6) und Gleitflächen (5) mindestens eine Klemmfläche (10) und mindestens eine Andruckfläche (9) der benachbarten Klemmstücke (4) und Spannstücke (2,3) jeweils senkrecht zur Längsachse des jeweils das Klemmstück (4) und das Spannstück (2, 3) verpannenden Spannmittels relativ zueinander bewegt werden.

2. Verbindungselement (1) nach Anspruch 1, **dadurch gekennzeichnet, dass** jedes Klemmstück (4) jeweils mindestens eine zu mindestens einer Andruckfläche (9) des mindestens einen benachbarten Spannstücks (2, 3) parallele Klemmfläche (10) aufweist.

3. Verbindungselement (1) nach Anspruch 1 oder 2, **dadurch gekennzeichnet, dass** die Spannelemente (2, 3) und/oder Klemmelemente (4) jeweils mindestens zwei Andruckflächen (9), insbesondere jeweils zwei fluchtende Andruckflächen (9), aufweisen

4. Verbindungselement (1) nach einem der Anspruch 2 bis 3, **dadurch gekennzeichnet, dass** bei dem Verspannen der Spannstücke (2, 3) auf das mindestens eine Klemmstück (4) aufgrund des Zusammenwirkens zwischen benachbarter Spannflächen (6) und Gleitflächen (5) die zueinander parallelen Klemmflächen (10) und Andruckflächen (9) der benachbarten Klemmstücke (4) und Spannstücke (2, 3) jeweils senkrecht zu diesen parallelen Klemmflächen (10) und Andruckflächen (9) relativ zueinander bewegt werden.

5. Verbindungselement (1) nach einem der vorhergehenden Ansprüche, **dadurch gekennzeichnet, dass** die Spannstücke (2, 3) und/oder das mindestens eine Klemmstück (4) an ihren Querstrukturen des T-förmigen Profils nach außen abgeschrägt beziehungsweise abgerundet geformt sind.

6. Verbindungselement (1) nach einem der vorhergehenden Ansprüche, **dadurch gekennzeichnet, dass** mindestens zwei Andruckflächen (9) jedes Spannstücks (2, 3) oder mindestens zwei Klemmflächen (10) jedes Klemmstücks (4) an Hinterschnitte (H) in den jeweiligen T-Nuten (T) der zu verbindenden Elemente (E) angepresst werden.

7. Verbindungselement (1) nach Anspruch 6, **dadurch gekennzeichnet, dass** mindestens ein Klemmstück (4) oder Spannstück (2, 3) auf einer Seite des T-förmigen Querschnittes an einem dort abstehenden Arm des T-förmigen Querschnitts in einer solchen Weise verkürzt ausgebildet sind, dass das Verbindungselement (1) durch Einführen der diesen verkürzten Armen gegenüberliegenden Arme in die T-Nut (T) und Einschwenken der verkürzten Arme von oben in die T-Nut (T) eingesetzt werden kann und dennoch eine ausreichend große Klemmfläche (10) beziehungsweise Andruckfläche (9) an dem oder den Klemmstück(en) (4) beziehungsweise Spannstück(en) (2, 3) an dem beziehungsweise den verkürzt ausgebildeten Arm(en) verbleibt, um ein Verklemmen der T-Nut (T) an dem anliegenden Hinterschnitt (H) zu gewährleisten.

8. Verbindungselement (1) nach einem der vorhergehenden Ansprüche, **dadurch gekennzeichnet, dass** das Spannmittel (11) eine durch mindestens Spannstück (2, 3) oder Klemmstück (4) hindurch geführte Spannschraube ist.

9. Verbindungselement (1) nach Anspruch 8, **dadurch gekennzeichnet, dass** in einem ersten in einem Spannstück (2, 3) oder Klemmstück (4) ein Innengewinde (8) ausgebildet ist zum Zusammenwirken mit dem Außengewinde der Spannschraube.

10. Verbindungselement (1) nach einem der Ansprüche 8 oder 9, **dadurch gekennzeichnet, dass** einem der Spannstücke (2, 3) eine Senkbohrung angeordnet ist zum Versenken eines Schraubenkopfes der Spannschraube.

11. Verbindungselement (1) nach einem der vorhergehenden Ansprüche, **dadurch gekennzeichnet, dass** kombinierte Spann-Klemmstücke (12) mit mindestens einem Spannteil und mindestens einem Klemmteil und mit jeweils einem an jedem Klemmteil und jedem Spannteil angreifenden Spannmittel (11) vorgesehen sind, bei denen die Längsrichtung mindestens zweier zugehöriger Spannmittel (11) nicht parallel verlaufen.

12. Verbindungselement (1) nach einem der vorhergehenden Ansprüche, **dadurch gekennzeichnet, dass** zwei Spannstücke (2, 3), ein Klemmstück (4), zwei Spann-Klemmstücke (12) und drei Spannmittel vorgesehen sind und die Spann-Klemmstücke (12) jeweils benachbart zu einem Spannstück (2, 3) und dem Klemmstück (4) sind und jeweils ein Spannmittel (11) ein Spannstück (2, 3) und den Klemmteil des Spann-Klemmstücks (12) verbindet und ein Spannmittel (11) die zwei Spannteile des Spann-Klemmstücks (12) mit dem Klemmstück (4) verbindet.

13. Verbindungselement (1) nach einem der Ansprüche 1 bis 11, **dadurch gekennzeichnet, dass** zwei Spannstücke (2, 3), ein Klemmstück (4) und ein Spannmittel (11) vorgesehen sind und das Klemmstück (4) in einer Ebene, in der auch die Längsrichtung des Spannmittels (11) verläuft einen T-förmigen Profilanteil aufweist und die Spannstücke (2, 3) in einem Querschnitt senkrecht zur Längsrichtung des Spannmittels (11) ein T-förmiges Profil aufweist.

14. Verbindungselement (1) nach Anspruche 13, **dadurch gekennzeichnet, dass** das Klemmstück (4) aus gegeneinander drehbaren, insbesondere drehbaren und lösbar arretierbaren, und miteinander verbundenen Teilen besteht, wobei das Spannmittel (11) durch das eine Teil verläuft und das zweite Teil den T-förmigen Profilanteil aufweist, der in einer Ebene, in der auch die Längsrichtung des Spannmittels (11) verläuft, liegt.

15. Verbindungselement (1) nach einem der Ansprüche 1 bis 11, **dadurch gekennzeichnet, dass** zwei Spannstücke (2, 3), ein Klemmstück (4) und zwei Spannmittel (11) vorgesehen sind und das Klemmstück (4) im Wesentlichen eine dreieckige Platte ist, an der an zwei Ecken die Spannmittel (11) angreifen und die Platte mit den Spannstücken (2, 3) verbinden, die in einer Ebene senkrecht zur Längsrichtung des jeweiligen Spannmittel (11) und parallel zur Flächennormalen der Platte jeweils einen T-förmigen Querschnitt aufweisen.
